# EUROPÄISCHE PATENTSCHRIFT

(11) **EP 0 867 638 B1**
(45) Veröffentlichungstag und Bekanntmachung des Hinweises auf die Patenterteilung: **11.09.2002**
(21) Anmeldenummer: 98103228.7
(22) Anmeldetag: 25.02.1998
(51) Int. Cl.: F16H 7/12

(54) **Verfahren zum Einbau einer eine Exzenteranordnung aufweisenden Riemenspannvorrichtung an einem Verbrennungsmotor sowie Vorrichtung zur Durchführung dieses Verfahren**
Method for mounting an eccentric type belt tensioner to an internal combustion engine and device for its application
Procédé de montage pour un tendeur de courroie de type excentrique à un moteur à combustion interne et dispositif de mise en oeuvre

(30) Priorität: 27.03.1997 DE 19712907
(43) Veröffentlichungstag der Anmeldung: 30.09.1998
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Steinberg, Rainer, D 51381 Leverkusen (DE); Lehtovaara, Jeorge, Woodbridge, Ontario L4L5T9 (CA); Thomanek, Ralf, 50765 KÖLN (DE)
(74) Vertreter: Bonsmann, Manfred, Dipl.-Ing.

(56) Entgegenhaltungen:
- EP-A- 0 456 142
- DE-A- 4 223 324
- US-A- 4 767 383

## Beschreibung

Die Erfindung betrifft ein Verfahren zum Einbau einer eine Exzenteranordnung aufweisenden Riemenspannvorrichtung an einen Verbrennungsmotor, bei dem die Riemenspannvorrichtung zunächst lose verschraubt und ein erstes Teilelement der Riemenspannvorrichtung gegen ein Verschwenken um die Verschraubachse gegenüber dem Verbrennungsmotor arretiert wird, anschließend eine über die Exzenteranordnung mit dem ersten Teilelement in Verbindung stehende Spannrolle der Riemenspannvorrichtung gegen einen Riemen verschwenkt und nach Anlage gegen den Riemen in einer den Riemen spannenden Weise weiterverschwenkt wird, wodurch infolge der von dem unter Spannung stehenden Riemen auf die Riemenspannvorrichtung aufgebrachten Gegenkraft ein zwischen dem ersten Teilelement und der Spannrolle angeordnetes zweites Teilelement der Riemenspannvorrichtung entgegen einer Vorspannkraft relativ zu dem ersten Teilelement in eine vorherbestimmte und die Arbeitsposition der Riemenspannvorrichtung bildende winkellage verschwenkt und die Riemenspannvorrichtung dann fest mit dem Verbrennungsmotor verbunden wird, wobei gleichzeitig die erreichte Arbeitsposition der Teilelemente relativ zueinander fixiert wird sowie eine Vorrichtung zur Durchführung dieses Verfahrens. Ein derartiges Verfahren sowie eine derartige Vorrichtung können aus der DE-A-4223324 als bekannt gelten.

Aus der DE 39 08 817 C1 ist es weiterhin bekannt, an den relativ zueinander verschwenkbaren Teilelementen optische Markierungen (nach Art von "Kimme und Korn") vorzusehen. Insbesondere bei einer Massenproduktion ist aber dieses bekannte Verfahren nachteilig, da die Bedienungsperson während des Einbauvorganges die gewünschte deckungsgleiche Lage von "Kimme und Korn" oft nur unrichtig erkennt, was in der Praxis zu einer Falscheinstellung der Riemenspannung führen kann. Dies hat dann einen instabilen Riemenlauf, auftretende Geräuschprobleme, ein verschobenes Kräftegleichgewicht und weitere Nachteile zur Folge. Eine falsche Einstellung kann bei Zahnriemen auch zur Gefahr eines Zahnspringens führen.

Der Erfindung liegt die Aufgabe zugrunde, das Verfahren der eingangs genannten Art dahingehend zu verbessern, daß die Sicherheit des Erreichens der gewünschten Arbeitsposition gegenüber dem Stand der Technik erhöht wird.

Zur Lösung dieser Aufgabe ist erfindungsgemäß vorgesehen, daß während der Verschwenkbewegung der Teilelemente der Riemenspannvorrichtung relativ zueinander der Verschwenkwinkel gemessen und das Erreichen eines vorherbestimmten Verschwenkbereiches angezeigt wird. Die Anzeige kann beispielsweise über ein optisches oder ein akustisches Signal erfolgen. Hierbei ist vorteilhaft, daß es für die Bedienungsperson nun nicht mehr erforderlich ist, die relative Winkelposition von zwei Markierungen auf relativ zueinander beweglichen Teilen zu überwachen und die Riemenspannvorrichtung dann fest mit dem Verbrennungsmotor zu verbinden, wenn die beiden Markierungen deckungsgleich übereinanderliegen, sondern die Bedienungsperson kann die Verbindung dann vornehmen, wenn das Erreichen der gewünschten Schwenklage ein Signal einer externen Anzeigeeinrichtung angezeigt wird. Ein weiterer Vorteil der Erfindung besteht darin, daß durch die Vorgabe eines Verschwenkbereiches ein Toleranzbereich der die Arbeitsposition der Riemenspannvorrichtung bildenden Winkellage vorgegeben werden kann.

In weiterer Ausgestaltung der Erfindung kann eine mit der Riemenspannvorrichtung verbindbare Kalibriereinrichtung mit einer die relative Winkellage der Teilelemente der Riemenspannvorrichtung ermittelnden Meßwertaufnehmeranordnung vorgesehen sein. Zur Anzeige der jeweils ermittelten relativen Winkellage der Teilelemente kann eine beispielsweise optisch und/oder akustisch arbeitende Anzeigeeinrichtung vorgesehen sein.

In weiterer Ausgestaltung der Erfindung kann vorgesehen sein, daß wenigstens ein Teilelement der Riemenspannvorrichtung einen Anschlag für einen Meßwertaufnehmer der Kalibriereinrichtung aufweist. Wenn während der Verschwenkbewegung der Anschlag gegen den Meßwertaufnehmer zur Anlage kommt, wird dadurch das Signal der externen Anzeigeeinrichtung erzeugt.

Es kann auch vorgesehen sein, daß die Teilelemente der Riemenspannvorrichtung jeweils Anschläge aufweisen, wobei ein vorherbestimmter Winkelabstandsbereich der Anschläge relativ zueinander einen Arbeitspositionsbereich für die Riemenspannvorrichtung darstellt, und daß die Kalibriereinrichtung zur Messung der relativen Winkellage der Anschläge zueinander ausgebildet ist.

Die Erfindung wird nachfolgend anhand des in den Zeichnungen dargestellten Ausführungsbeispiels näher erläutert. Es zeigen:
- Fig. 1: eine schematische Darstellung einer Riemenspannvorrichtung in Draufsicht, wobei die Position der Teilelemente der Riemenspannvorrichtung in ihrer Position vor der Anbringung an einem Verbrennungsmotor (Anlieferungsposition) dargestellt sind;
- Fig. 2: eine Darstellung entsprechend Fig. 1, jedoch in an einen Verbrennungsmotor eingebautem Zustand;
- Fig. 3: Teilelemente der Riemenspannvorrichtung in Explosionsdarstellung;
- Fig. 4 und Fig. 5: jeweils um 90° zueinander versetzt Seitenansichten eines Verschwenkwerkzeuges;
- Fig. 6: eine schematische Darstellung einer Riemenspannvorrichtung nach Arretierung des ersten Teilelementes relativ zu dem Verbrennungsmotor, jedoch vor dem Verschwenken, wobei außerdem schematisch ein Riemen, ein Verschwenkwerkzeug, eine Meßwertaufnehmeranordnung und eine extern angeordnete Anzeigeeinrichtung dargestellt sind;
- Fig. 7: eine Teildarstellung entsprechend Fig. 6, in der das Gehäuse der Meßwertaufnehmeranordnung nur teilweise dargestellt und ein Meßwertaufnehmer gezeigt ist;
- Fig. 8: eine Darstellung entsprechend Fig. 7, jedoch in verschwenkter Position, in der ein an einem ersten Teilelement der Riemenspannvorrichtung vorgesehener Anschlag gegen den Meßwertaufnehmer anliegt.

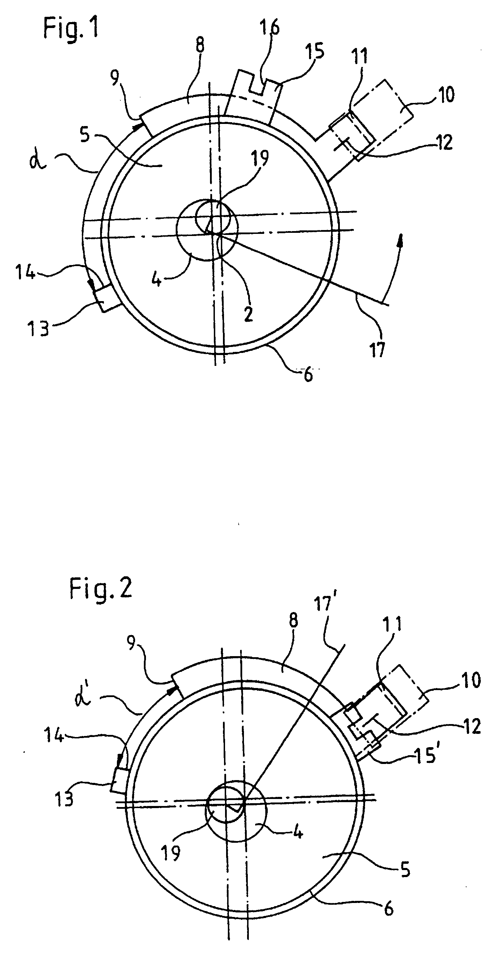

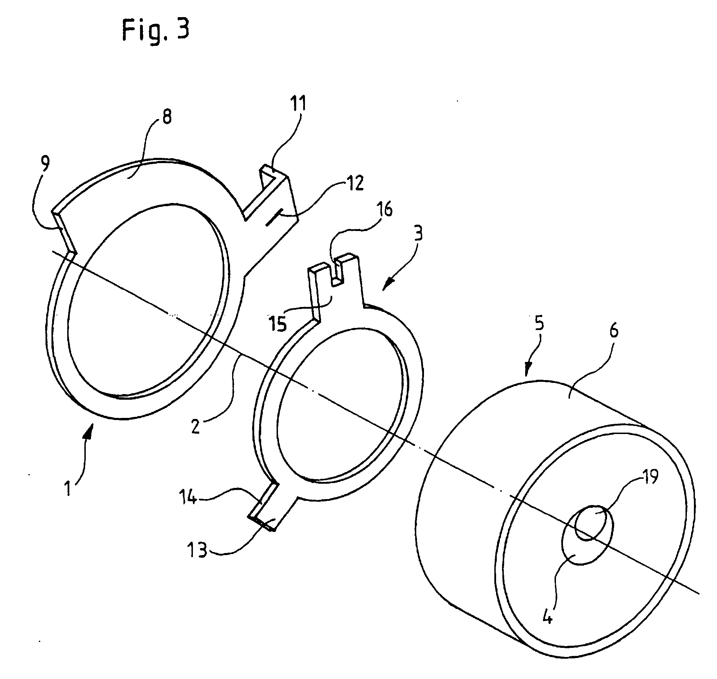

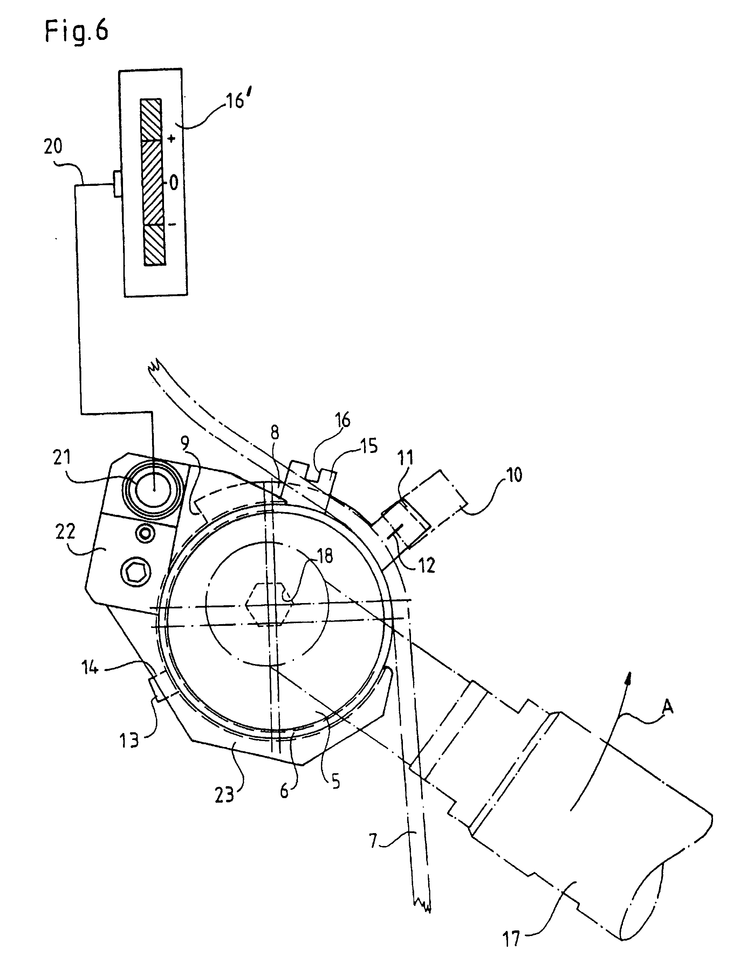

In Fig. 1 bis Fig. 3 ist eine Riemenspannvorrichtung dargestellt, die ein als Grundplatte ausgebildetes erstes Teilelement 1, ein relativ zu dem ersten Teilelement um eine Mittelachse verschwenkbar entgegen der Vorspannkraft einer (nicht dargestellten) Vorspannfeder angeordnetes zweites Teilelement 3 und eine mit dem zweiten Teilelement 3 über eine lediglich schematisch dargestellte Exzenteranordnung 4 in Verbindung stehende Spannrolle 5 mit einer Lauffläche 6 für einen beispielsweise als Zahnriemen ausgebildet Riemen 7 (Fig. 6 bis Fig. 8) aufweist. Das als Grundplatte ausgebildete erste Teilelement hat einen vergrößerten Umfangsbereich 8 mit einem Anschlag 9 sowie eine zur Arretierung gegenüber einem schematisch dargestellten und mit 10 bezeichneten Verbrennungsmotor vorgesehenen Einhängenase 11. Das die Einhängenase 11 aufweisende Teil des ersten Teilelementes ist mit einer Markierung 12 versehen.

Das zweite Teilelement 3, welches im nicht an dem Verbrennungsmotor montiertem Zustand der Riemenspannvorrichtung relativ zu dem ersten Teilelement 1 über die (nicht dargestellte) Vorspanneinrichtung in der in Fig. 1 dargestellten Position gehalten ist, weist eine Anschlagnase 13 mit einem Anschlag 14 sowie eine Fixierfahne 15 mit einem Fixierausschnitt 16 auf. In eingebautem Zustand liegen, wie aus Fig. 2 ersichtlich, der Fixierausschnitt 16 des zweiten Teilelementes 3 und die Fixiermarkierung 12 des ersten Teilelementes 1 deckungsgleich übereinander. Der Fixierausschnitt und die Fixiermarkierung werden jedoch gemäß der vorliegenden Erfindung für die Serienmontage der Riemenspannvorrichtung an einem Verbrennungsmotor nicht benötigt, sondern dienen lediglich dazu, bei späteren Wartungsarbeiten oder Reparaturarbeiten eine Einstellung nach dem Stande der Technik vornehmen zu können, bei der es erforderlich ist, das deckungsgleiche Übereinanderliegen des Fixierausschnittes 16 und der Fixiermarkierung 12 während der Montage zu beobachten.

In Fig. 1 ist der Winkel zwischen dem Anschlag 9 des ersten Teilelementes und dem Anschlag 14 des zweiten Teilelementes mit α bezeichnet. In Fig. 2, bei der die in die Arbeitsposition verschwenkte Lage der beiden Teilelemente 1 und 3 dargestellt ist, ist der Winkel zwischen den beiden Anschlägen mit α' bezeichnet. Gemäß der Erfindung wird der Verschwenkwinkel α zwischen den beiden Teilelementen 1 und 3 gemessen und das Erreichen eines vorherbestimmten Verschwenkbereiches α' extern über eine mit 16' bezeichnete Anzeigeeinrichtung (Fig. 6) angezeigt.

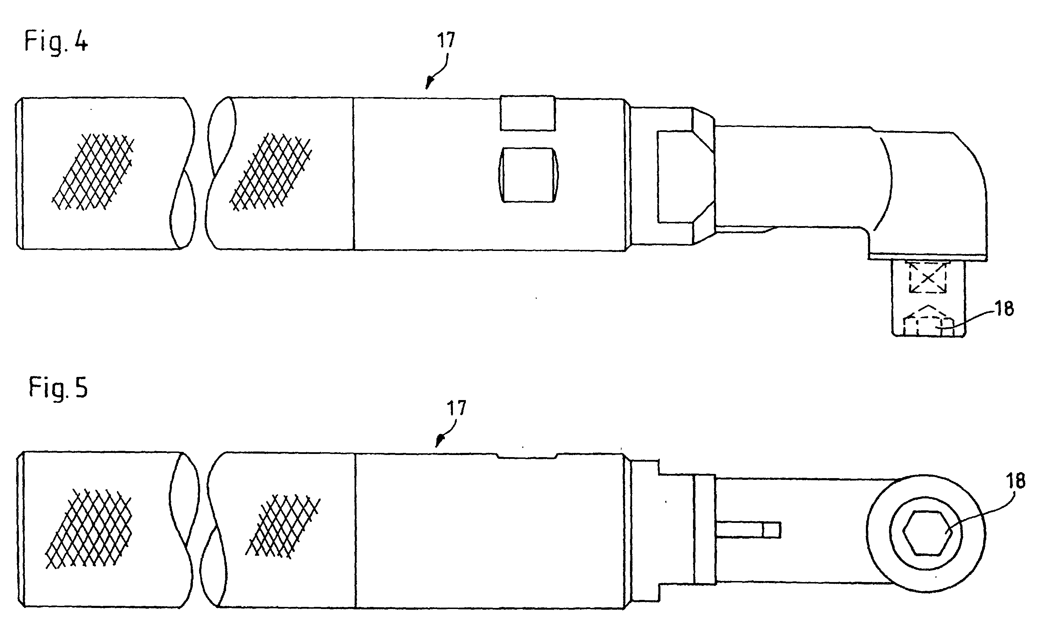

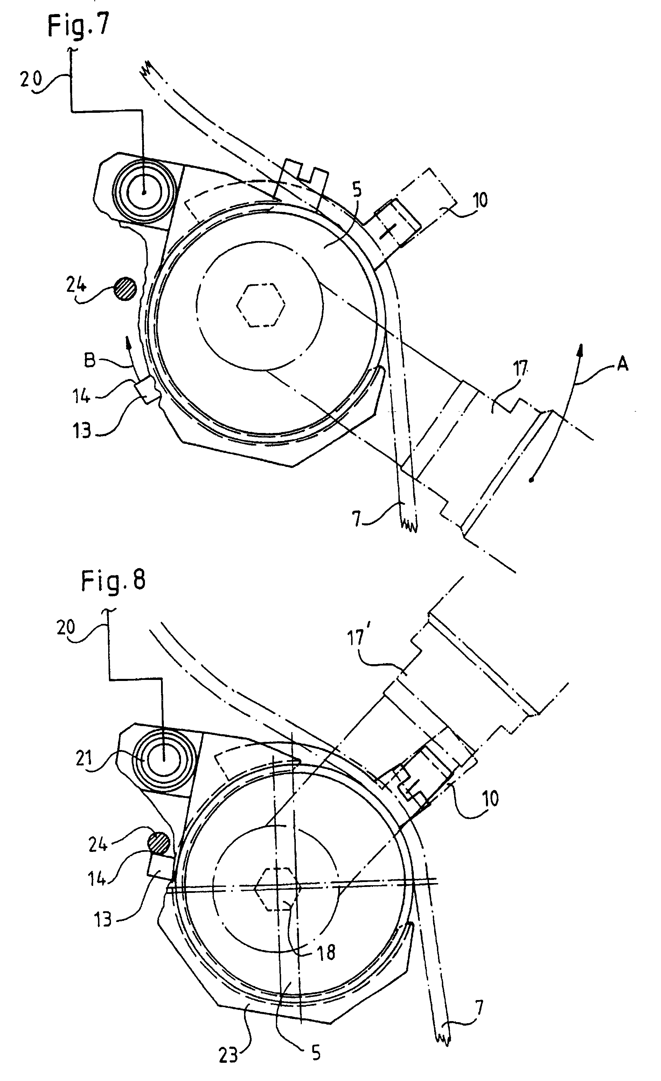

Das Verschwenken der Teilelemente 1 und 3 relativ zueinander erfolgt mittels eines Verschwenkwerkzeuges 17, welches in Fig. 4 und Fig. 5 detailliert dargestellt ist und einen Innensechskant 18 aufweist, der auf einen lediglich schematish dargestellten Außensechskant 19 der Exzenteranordnung 4 aufsteckbar ist. Bei einem Verschwenken des Verschwenkwerkzeuges 17 in Pfeilrichtung A wird das Teilelement 3 in Pfeilrichtung B (vgl. Fig. 7) verschwenkt.

Wie aus Fig. 6 ersichtlich, steht die Anzeigeeinrichtung 16 über eine zur Datenübertragung geeignete Leitung 20 mit einer schematisch dargestellten Datenübertragungsanschlußeinrichtung 21 in Verbindung, welche einem Gehäuse 22 mit einer Meßwertaufnehmeranordnung zugeordnet ist. Die Meßwertaufnehmeranordnung 22 ist einer mit 23 bezeichneten Kalibriereinrichtung zugeordnet, welche auf die Lauffläche 6 der Spannrolle 5 aufsetzbar ist. Ein Meßwertaufnehmer 24 liegt im Bereich der Bewegungsbahn des Anschlages 14 der Anschlagnase 13 des zweiten Teilelementes 3.

Der Einbau der Riemenspannvorrichtung beginnt damit, daß die Riemenspannvorrichtung zunächst mit dem Verbrennungsmotor 10 lose verschraubt und das erste Teilelement 1 durch Einhängen der Einhängenase 11 in eine entsprechende Öffnung des Verbrennungsmotors gegen ein Verschwenken um die Verschraubachse 2 arretiert wird. Anschließend wird die Spannrolle 5 gegen den Riemen 7 verschwenkt, wobei die Verschwenkbewegung mittels des Angriff des Werkzeugs 17 erfolgt. Wenn die Spannrolle 5 gegen den Riemen 7 anliegt, erfolgt eine Weiterschwenkbewegung. Infolge der von dem unter Spannung stehenden Riemen auf die Riemenspannvorrichtung aufgebrachten Gegenkraft erfolgt eine Verschwenkbewegung des zweiten Teilelementes 3 relativ zu dem ersten Teilelement 1. Dadurch verkleinert sich der Winkel α gemäß Fig. 1 solange, bis der mit α' (Fig. 2) bezeichnete Winkel bzw. Winkelbereich erreicht ist. Wie sich aus dem Vergleich von Fig. 7 und Fig. 8 ergibt, liegt in der der Darstellung in Fig. 1 entsprechenden Darstellung in Fig. 7 der Anschlag 14 nicht gegen den Meßwertaufnehmer 24 an. In der der Darstellung in Fig. 2 entsprechenden Darstellung in Fig. 8 liegt jedoch der Anschlag 14 gegen den Meßwertaufnehmer 24 an. Bei Erreichen dieser Winkellage, die der gewünschten Arbeitsposition der Teilelemente relativ zueinander entspricht, wird ein Signal des Meßwertaufnehmers 24 über die Datenübertragungseinrichtung 21 und die Leitung 20 an die extern angeordnete Anzeigeeinrichtung 16 übertragen und dort angezeigt. Der mit "0" bezeichnete schraffierte Anzeigebereich entspricht dabei einem vorherbestimmten Verschwenkbereich. Sofern sich die Anzeige innerhalb des Bereiches "0" befindet, ertönt beispielsweise ein entsprechendes akustisches Signal oder es wird ein optisches Signal (z.B. "grün") erzeugt. Der oberhalb des Bereiches "0" liegende, mit "+" gekennzeichnete Bereich entspricht einem Überschreitungsbereich und der unterhalb des Bereiches "0" liegende Bereich "-" entspricht einem Unterschreitungsbereich. Das die Meßwertaufnehmeranordnung und die Datenübertragungseinrichtung aufweisende Gehäuse befindet sich auf der Kalibriereinrichtung 23, welche außerhalb des Anlagebereiches des Riemens 7 auf die Spannrolle 5 aufgesetzt ist. Nach Erreichen des Anzeigebereiches "0" wird dann durch die Bedienungsperson die Riemenspannvorrichtung fest mit dem Verbrennungsmotor 10 verschraubt, wobei gleichzeitig die erreichte Arbeitsposition der Teilelemente 1 und 3 relativ zueinander fixiert wird.

## Patentansprüche

1. Verfahren zum Einbau einer eine Exzenteranordnung (4) aufweisenden Riemenspannvorrichtung an einen Verbrennungsmotor (10), bei dem die Riemenspannvorrichtung zunächst lose verschraubt und ein erstes Teilelement (1) der Riemenspannvorrichtung gegen ein Verschwenken um die Verschraubachse (2) gegenüber dem Verbrennungsmotor arretiert wird, anschließend eine über die Exzenteranordnung mit dem ersten Teilelement in Verbindung stehende Spannrolle (5) der Riemenspannvorrichtung gegen den Riemen (7) verschwenkt und nach Anlage gegen den Riemen in einer den Riemen spannenden Weise weiterverschwenkt wird, wodurch infolge der von dem unter Spannung stehenden Riemen auf die Riemenspannvorrichtung aufgebrachten Gegenkraft ein zwischen dem ersten Teilelement und der Spannrolle angeordnetes zweites Teilelement (3) der Riemenspannvorrichtung entgegen einer Vorspannkraft relativ zu dem ersten Teilelement in eine vorherbestimmte und die Arbeitsposition der Riemenspannvorrichtung bildende Winkellage verschwenkt und die Riemenspannvorrichtung dann fest mit dem Verbrennungsmotor verbunden wird wobei gleichzeitig die erreichte Arbeitsposition der Teilelemente relativ zueinander fixiert wird, **dadurch gekennzeichnet, daß** während der Verschwenkbewegung der Teilelemente (1, 3) relativ zueinander die Verschwenkwinkel gemessen und das Erreichen eines vorherbestimmten Verschwenkbereiches (α') angezeigt wird.

2. Vorrichtung zur Durchführung des Verfahrens nach Anspruch 1, **dadurch gekennzeichnet, daß** eine mit der Riemenspannvorrichtung verbindbare Kalibriereinrichtung (23) mit einer die relative Winkellage der Teilelemente (1, 3) ermittelnden Meßwertaufnehmeranordnung (24) vorgesehen ist, und daß eine Anzeigeeinrichtung (16) zur Anzeige der jeweils ermittelten relativen Winkellage der Teilelemente (1, 3) vorgesehen ist.

3. Vorrichtung nach Anspruch 2, **dadurch gekennzeichnet, daß** die Kalibriereinrichtung einen Teil eines Verschwenkwerkzeuges (17) zum Verschwenken der Teilelemente (1, 3) bildet.

4. Vorrichtung nach Anspruch 2 oder 3, **dadurch gekennzeichnet, daß** wenigstens ein Teilelement (3) der Riemenspannvorrichtung einen Anschlag (14) für einen in der Bewegungsbahn des Anschlages liegenden Meßwertaufnehmer (24) der Kalibriereinrichtung (23) aufweist.

5. Vorrichtung nach einem der Ansprüche 2 bis 4, **dadurch gekennzeichnet, daß** die Teilelemente (1, 3) der Riemenspannvorrichtung jeweils Anschläge (9, 14) aufweisen, und ein vorherbestimmter Winkelabstandsbereich (α') der Anschläge relativ zueinander einen Arbeitspositionsbereich für die Riemenspannvorrichtung darstellt, und daß die Kalibriereinrichtung (23) zur Messung der relativen Winkellage der Anschläge zueinander ausgebildet ist.

## Claims

1. Method for mounting a belt tensioner having an eccentric arrangement (4) to an internal combustion engine (10) wherein the belt tensioner is firstly screwed loosely and a first part element (1) of the belt tensioner is locked against swivelling about the screwing axis (2) in relation to the internal combustion engine, subsequently a belt idler (5) of the belt tensioner connected with the first part element by means of the eccentric arrangement is swivelled against the belt (7) and after contacting against the belt is further swivelled in such a way that the belt is further tensioned wherein due to the counteracting force applied to the belt tensioner by the tensioned belt a second element (3) of the belt tensioner arranged between the first part element and the belt idler is swivelled contrary to a pretension force relative to the first part element into a pre-determined angle position forming the working position of the belt tensioner and the belt tensioner is then securely connected with the internal combustion engine wherein simultaneously the achieved working position of the part elements relative to each other is fixed, **characterised in that** during the swivel movement of the part elements (1, 3) relative to each other the swivel angles are measured and the reaching of a pre-determined swivel area (α') is indicated.

2. Device for implementing the method according to claim 1 **characterised in that** a calibrating device (23) which can be connected with the belt tensioner is provided with a measurement value recording arrangement (24) determining the relative angle position of the part elements (1, 3) and that a display device (16) is provided for displaying the respectively determined relative angle position of the part elements (1, 3).

3. Device according to claim 2 **characterised in that** the calibrating device forms a part of a swivel tool (17) for swivelling the part elements (1, 3).

4. Device according to claim 2 or 3 **characterised in that** at least one part element (3) of the belt tensioner has a stop (14) for a measurement value recorder (24) of the calibrating device (23) lying in the movement path of the stop.

5. Device according to one of the claims 2 to 4 **characterised in that** the part elements (1, 3) of the belt tensioner each have stops (9, 14) and a pre-determined angle distance area (α') of the stops relative to each other represents a working position area for the belt tensioner and that the calibration device (23) is formed for measuring the relative angle position of the stops to each other.

## Revendications

1. Procédé pour monter un tendeur de courroie muni d'un dispositif à excentrique (4) sur un moteur à combustion interne (10), selon lequel on visse tout d'abord le tendeur de courroie sans le serrer à bloc et on bloque un premier élément (1) du tendeur de courroie pour éviter qu'il ne pivote par rapport au moteur à combustion interne autour de l'axe de vissage (2), puis l'on fait pivoter un galet tendeur (5) du tendeur de courroie relié au premier élément par le biais de l'excentrique vers la courroie (7) et, une fois qu'il est appliqué contre la courroie, on continue à le faire pivoter de manière à ce qu'il tende la courroie, ce qui, en raison de la force antagoniste exercée par la courroie tendue sur le tendeur de courroie, fait pivoter un deuxième élément (3) du tendeur de courroie, qui est placé entre le premier élément et le galet tendeur, par rapport au premier élément, contre une force de précontrainte, dans une position angulaire prédéfinie qui constitue la position de travail du tendeur de courroie, et relie ainsi solidement le tendeur de courroie au moteur à combustion interne, sachant qu'est fixée en même temps la position de travail des éléments l'un par rapport à l'autre, **caractérisé en ce que**, pendant le mouvement pivotant des éléments (1, 3) l'un par rapport à l'autre, on mesure l'angle de pivotement et on indique qu'une zone de pivotement prédéfinie (α') est atteinte.

2. Dispositif pour mettre en oeuvre le procédé selon la revendication 1, **caractérisé en ce qu'**est prévu un dispositif de calibrage (23) pouvant être relié au tendeur de courroie, qui comporte un arrangement de capteur de valeurs de mesure (24) qui détermine la position angulaire relative des éléments (1, 3), et **en ce qu'**est prévu un dispositif indicateur (16) pour afficher la position angulaire relative des éléments (1, 3) qui a chaque fois été déterminée.

3. Dispositif selon la revendication 2, **caractérisé en ce que** le dispositif de calibrage constitue une partie d'un outil de pivotement (17) pour faire pivoter les éléments (1, 3).

4. Dispositif selon la revendication 2 ou 3, **caractérisé en ce qu'**au moins un élément (3) du tendeur de courroie présente une butée (14) pour un capteur de valeurs de mesure (24) du dispositif de calibrage (23) situé sur la trajectoire de la butée.

5. Dispositif selon l'une des revendications 2 à 4, **caractérisé en ce que** les éléments (1, 3) du tendeur de courroie présentent chacun des butées (9, 14) et **en ce qu'**une plage d'écart angulaire (α') prédéfinie entre les butées constitue une plage de positions de travail pour le tendeur de courroie, et **en ce que** le dispositif de calibrage (23) est réalisé de manière à mesurer la position angulaire relative des butées l'une par rapport à l'autre.
